# EUROPEAN PATENT APPLICATION

(11) **EP 4 516 557 A1**
(43) Date of publication of application: **05.03.2025**
(21) Application number: 23937732.8
(22) Date of filing: 28.12.2023
(51) Int. Cl.: B60K 35/00, G02B 27/01, B60K 35/22, B60K 35/23, B60K 35/81

(54) **DISPLAY DEVICE FOR VEHICLE**

(30) Priority: 28.06.2023 KR 20230083536
(71) Applicant: LG Electronics Inc., Yeongdeungpo-gu Seoul 07336 (KR)
(72) Inventor: KIM, Jinyong, Seoul 06772 (KR); JUNG, Youngho, Seoul 06772 (KR)
(74) Representative: Vossius & Partner Patentanwälte Rechtsanwälte mbB
(86) International application number: PCT/KR2023/021798
(87) International publication number: WO 2025/005371

(57) **Abstract**

A vehicle display device may comprise a screen; an picture generation unit configured to output a projected image; a first reflection unit having a first reflection surface that reflects the projected image output from the picture generation unit to the screen; a second reflection unit having a second reflection surface that reflects the projected image output from the picture generation unit to a windshield; a regulator configured to change at least one of a position of the first reflection unit, an angle of the first reflection unit, a position of the second reflection unit, and an angle of the second reflection unit.

## Description

### [Technical Field]

The present disclosure relates to a vehicle display device.

### [Background Art]

For example, a display is disposed in a cluster or the like to display various types of information. Meanwhile, in order to display vehicle driving information or the like, there is a trend to install various displays, such as Audio Video Navigation (AVN) displays and head-up displays that output projected images on the windshield, in vehicles, separately from the cluster.

U.S. Registered Patent Publication US10,298,890 (patent dated May 21, 2019) relates to a vehicle display device and discloses a cluster display by image projection, and the cluster display comprises a projector and a reflective mirror that reflects a display light generated from the projector onto the screen.

### [Disclosure]

### [Technical Problem]

An object of the present embodiment is to provide a vehicle display device that may provide both a screen image and a HUD image using a single picture generation unit.

An object of the present embodiment is to provide a vehicle display device that may change the size or position of the image displayed on the screen.

An object of the present embodiment is to provide a vehicle display device that may change the size or position of the HUD image.

### [Technical Solution]

A vehicle display device according to the present embodiment may comprise a screen; an picture generation unit configured to output a projected image; a first reflection unit having a first reflection surface that reflects the projected image output from the picture generation unit to the screen; a second reflection unit having a second reflection surface that reflects the projected image output from the picture generation unit to a windshield; a regulator configured to change at least one of a position of the first reflection unit, an angle of the first reflection unit, a position of the second reflection unit, and an angle of the second reflection unit.

A distance between the picture generation unit and the first reflection unit may be shorter than a distance between the picture generation unit and the second reflection unit.

A distance between the windshield and the first reflection unit may be longer than a distance between the windshield and the second reflection unit.

The angle of the first reflection unit and the angle of the second reflection unit may be different from each other.

The first reflection unit and the second reflection unit may be tilted in opposite directions.

The first reflection unit and the second reflection unit may be parallel.

The regulator may comprise a lifter configured to move the position of the first reflection unit.

The first reflection unit may be moved to a first position or a second position by the lifter, the first position may be a position where the projected image output from the picture generation unit is distributed to the first reflection unit and the second reflection unit, and the second position may be a position where the first reflection unit reflects all projected images output from the picture generation unit to the screen.

The first reflection unit may be disposed to be movable to a third position by the lifter, and the third position may be a position where the projected image output from the picture generation unit is not reflected by the first reflection unit.

The regulator may comprise a rotor that changes the angle of the first reflection unit.

The first reflection unit may be changed to a first angle or a second angle by the rotor.

The first angle may be an angle at which the first reflection unit reflects the projected image output from the picture generation unit to a first height of the screen.

The second angle may be an angle at which the first reflection unit reflects the projected image output from the picture generation unit to a second height of the screen, and the second height of the screen may be higher than the first height of the screen.

The regulator may further comprise a lifter configured to move the position of the second reflection unit.

The regulator may comprise a rotor configured to change the angle of the second reflection unit.

The second reflection unit may be changed to a first angle or a second angle by the rotor, the first angle may be an angle that reflects the projected image output from the picture generation unit to the first height of the windshield, the second angle may be an angle that reflects the projected image output from the picture generation unit to the second height of the windshield, and the second height of the windshield may be lower than the first height of the windshield.

The vehicle display device may further comprise an input interface through which a user inputs; and an MCU that controls the position or angle of at least one of the first reflection unit and the second reflection unit according to an input of the input interface.

### [Advantageous Effect]

According to the present embodiment, one picture generation unit may generate a screen image and a HUD image together by using the first reflection unit and the second reflection unit.

In addition, the regulator may change at least one of the position of the first reflection unit, the angle of the first reflection unit, the position of the second reflection unit, and the angle of the second reflection unit to change the size or position of the image displayed on the screen and to change the size or location of the image displayed through the HUD.

### [Description of Drawings]

FIG. 1 is a perspective view illustrating a first example of a vehicle display device according to the present embodiment.
FIG. 2 is a side view illustrating a first example of a vehicle display device according to the present embodiment.
FIG. 3 is a side view illustrating an example in which the position of the first reflection unit illustrated in FIG. 2 is regulated.
FIG. 4 is a view illustrating a display formed by a first example of a vehicle display device according to the present embodiment.
FIG. 5 is a side view illustrating a second example of a vehicle display device according to the present embodiment.
FIG. 6 is a side view illustrating an example in which the position of the first reflection unit illustrated in FIG. 5 is regulated.
FIG. 7 is a view illustrating a display formed by a second example of a vehicle display device according to the present embodiment.
FIG. 8 is a side view illustrating a third example of a vehicle display device according to the present embodiment.
FIG. 9 is a side view illustrating an example of regulating the angle of the first reflection unit and the angle of the second reflection unit illustrated in FIG. 8.
FIG. 10 is a side view illustrating a fourth example of a vehicle display device according to the present embodiment.
FIG. 11 is a side view illustrating an example in which the position and angle of the first reflection unit illustrated in FIG. 10 are regulated.
FIG. 12 is a side view illustrating a fifth example of a vehicle display device according to the present embodiment.
FIG. 13 is a side view illustrating an example in which at least one of the position and angle of the first reflection unit illustrated in FIG. 12 is regulated and at least one of the position and angle of the second reflection unit is regulated.
FIG. 14 is a control block diagram of a vehicle display device according to the present embodiment.

### [Best Mode]

Hereinafter, specific embodiments of the present disclosure will be described in detail along with the drawings.

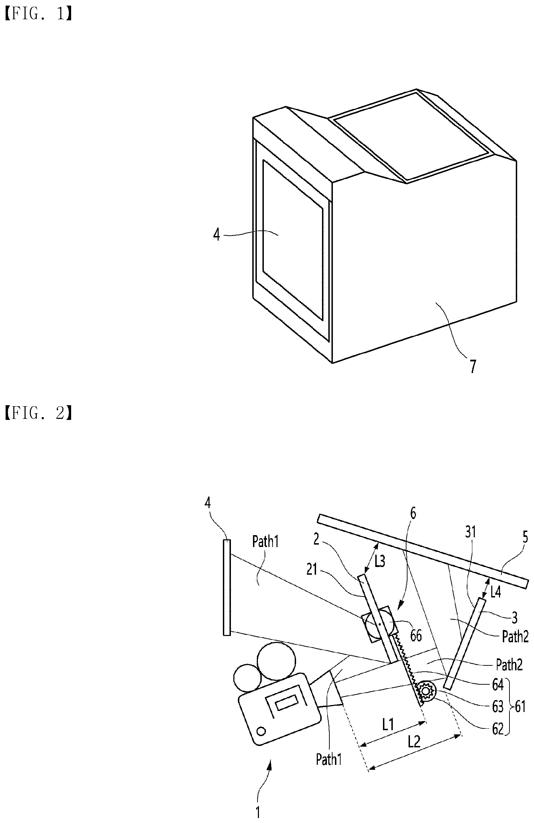

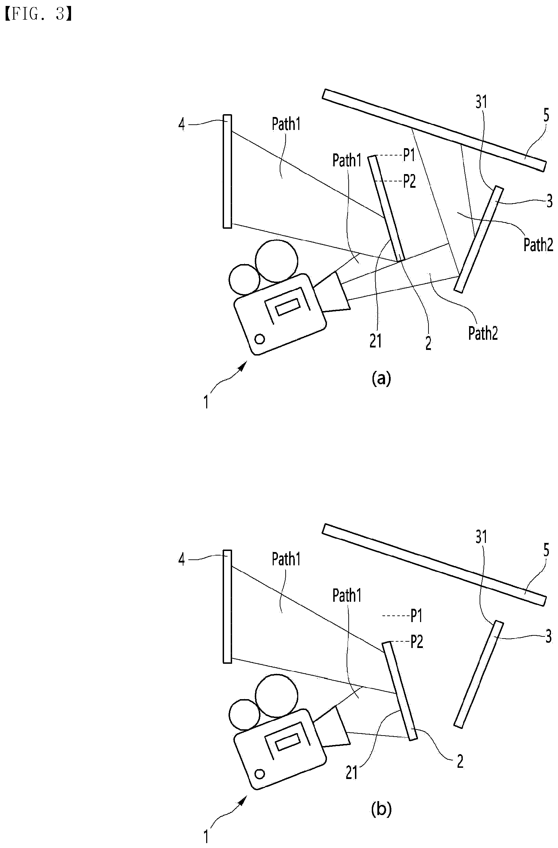

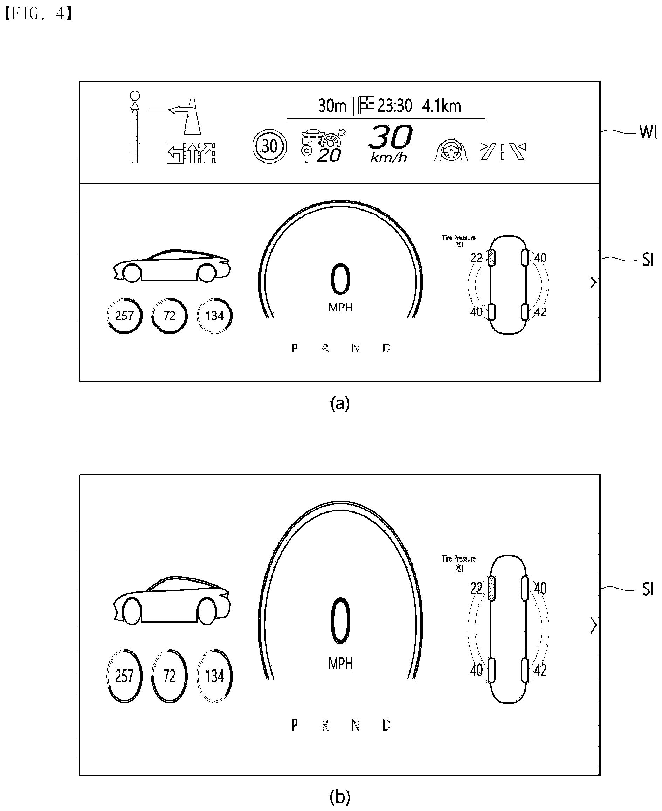

FIG. 1 is a perspective view illustrating a first example of a vehicle display device according to the present embodiment, FIG. 2 is a side view illustrating a first example of a vehicle display device according to the present embodiment, FIG. 3 is a side view illustrating an example in which the position of the first reflection unit illustrated in FIG. 2 is regulated, and FIG. 4 is a view illustrating a display formed by a first example of a vehicle display device according to the present embodiment.

A vehicle display device may be installed in a vehicle and may project images onto a screen and a windshield of the vehicle (hereinafter, referred to as a windshield).

The vehicle display device may comprise an picture generation unit 1, a first reflection unit 2, a second reflection unit 3, and a screen 4.

The vehicle display device may project a first image on the screen 4 and a second image on the windshield 5 using the picture generation unit 1.

The vehicle display device may be a dual projection display (DPD) that may project two images using the picture generation unit 1.

The screen 4 may form a cluster display of the vehicle together with the picture generation unit 1 and the first reflection unit 2. The vehicle display device may display driving status, operation information, or the like through the screen 4.

The windshield 5 may form a Head Up Display (HUD) together with the picture generation unit 1 and the second reflection unit 3. The vehicle display device may display vehicle driving information through the windshield 5.

The vehicle display device may project a first image on the screen 4 and a second image on the windshield 5. The vehicle display device may prevent the image from being projected on the screen 4 and focus the image on the windshield 5. The vehicle display device may prevent the image from being projected to the windshield 5 and focus the image on the screen 4.

A picture generation unit (IGU; 1) may output a projected image
The picture generation unit 1 may comprise a light output unit for outputting light
The light output unit may comprise a light source and a digital mirror unit that reflects light output from the light source.

The light source may comprise an LED diode, a laser diode, or the like.

The digital mirror unit may comprise a plurality of digital mirrors. An example of a digital mirror unit may comprise a digital micromirror device (DMD).

The picture generation unit 1 may further comprise a display element such as a liquid crystal panel that reflects light output from the light source.

When the display element is a liquid crystal panel, the liquid crystal panel may comprise a plurality of pixels for driving the liquid crystal.

The picture generation unit 1 may comprise a digital mirror control part for controlling the digital mirror unit, a light source control part for controlling the light source, and a panel control part for controlling the liquid crystal panel.

The picture generation unit 1 may comprise a processor, and the processor may comprise a digital mirror control part for controlling the digital mirror unit, a light source control part for controlling the light source, and a panel control part for controlling the liquid crystal panel.

The picture generation unit 1 may output a projected image in a forward direction or an oblique direction above the front.

The first reflection unit 2 may be disposed to reflect the projected image output from the picture generation unit 1 onto the screen 4. The first reflection unit 2 may be disposed vertically or tilted.

The rear surface of the first reflection unit 2 may be a reflection surface 2 (first reflection surface) that reflects light. The first reflection unit 2 may be a reflection mirror with a first reflection surface 21 formed on the rear surface thereof.

The second reflection unit 3 may be disposed to reflect the projected image output from the picture generation unit 1 to the windshield 5. The second reflection unit 3 may be disposed vertically or tilted.

The rear surface of the second reflection unit 3 may be a reflection surface 31 (second reflection surface) that reflects light. The second reflection unit 3 may be a reflection mirror with a first reflection surface 31 formed on the rear surface thereof.

Screen 4 may be a transmissive screen. The screen 4 may comprise a transmission medium, and the screen 4 may comprise an optical sheet having a transmittance. The screen 4 may comprise a variable transmission part with variable transmittance, and the variable transmission part may comprise a material with variable electrical transmittance such as Polymer Dispersed Liquid Crystal (PDLC).

Windshield 5 may be a reflective screen and may comprise a reflective medium.

The driver (that is, eye box) may recognize the image formed on the screen 4 and the image formed in front of the windshield 2 through the windshield 5.

The angle of the first reflection unit 2 and the angle of the second reflection unit 3 may be different.

The first reflection unit 2 and the second reflection unit 3 may be tilted in opposite directions.

The reflection surface 21 of the first reflection unit 2 may face the lower rear, and the reflection surface 31 of the second reflection unit 3 may face the upper rear.

A part of the first reflection unit 2 may be located between the picture generation unit 1 and the second reflection unit 3.

The distance (L1, hereinafter referred to as the first distance) between the picture generation unit 1 and the first reflection unit 2 may be shorter than the distance (L2, hereinafter referred to as the second distance) between the picture generation unit 1 and the second reflection unit 3.

The first distance L1 may be the shortest distance between the picture generation unit 1 and the first reflection unit 2.

The second distance L2 may be the shortest distance between the picture generation unit 1 and the second reflection unit 3.

The distance (L3, hereinafter referred to as the third distance) between the windshield 5 and the first reflection unit 2 may be longer than the distance (L4, hereinafter referred to as the fourth distance) between the windshield 5 and the second reflection unit 3.

The third distance L3 may be the shortest distance between the windshield 5 and the first reflection unit 2.

The fourth distance L4 may be the shortest distance between the windshield 5 and the second reflection unit 3.

As illustrated in FIG. 3 (a), when the first reflection unit 2 is located at the first position P1, the third distance L3 and the fourth distance L4 may be the same or similar. As illustrated in FIG. 3 (b), when the first reflection unit 2 is located at the second position P2, the third distance L3 may be longer than the fourth distance L4.

The vehicle display device may form a first optical path Path 1 leading to the picture generation unit 1, the first reflection unit 2, and the screen 4, and a second optical path Path 2 leading to the picture generation unit 1, the second reflection unit 3, and the windshield 5.

The vehicle display device may change at least one of the first optical path Path 1 and the second optical path (Path 2). The vehicle display device may comprise a regulator 6. The regulator 6 may regulate the first optical path Path 1 or the second optical path (Path 2).

The regulator 6 may change at least one of the position of the first reflection unit 2, the angle of the first reflection unit 2, the position of the second reflection unit 3, and the angle of the second reflection unit 3.

The regulator 6 may change the position of the first reflection unit 2. The regulator 6 may comprise a lifter 61 (see FIG. 2) that moves the position of the first reflection unit 2.

An example of the lifter 61 may comprise a lifting motor 62 and at least one power transmission member 63 and 64 that transmits the driving force of the lifting motor 62 to the first reflection unit 2. Examples of the power transmission members 63 and 64 may comprise a pinion 63 installed on the rotation shaft of the lifting motor 62 and a rack 64 formed on the first reflection unit 2 and engaged with the pinion 63. Another example of the lifter 61 may be a linear motor or cylinder connected to the first reflection unit 2.

Of course, the lifter 61 is not limited to the type thereof as long as it can move the first reflection unit 2, and all types of lifts may be applied.

The lifter 61 may change the position of the first reflection unit 2 by moving the first reflection unit 2, and the position of the first reflection surface 21 formed on the first reflection unit 2 may be changed.

The regulator 6 may further comprise a rotor 66 (see FIG. 2) that changes the angle of the first reflection unit 2.

The rotor 66 may be a rotational drive source that rotates the first reflection unit 2. The rotor 66 may comprise a rotation motor connected to the first reflection unit 2. Hereinafter, the rotor and the rotation motor are denoted by reference numeral 66.

One example of the rotor 66 may comprise a rotation motor including a rotation shaft connected to the first reflection unit 2. Another example of the rotor 66 may comprise a motor and a reducer having an input shaft connected to the rotation shaft of the motor and an output shaft connected to the first reflection unit 2. Of course, the rotor 66 is not limited to the type thereof as long as it may rotate the first reflection unit 2, all types of rotors may be applied.

It is possible for the regulator 6 to comprise either the lifter 61 or the rotor 66, and it is also possible to comprise both the lifter 61 and the rotor 66.

When the regulator 6 comprises the lifter 61 and the rotor 66 together, an example of the regulator 6 is that the rotor 66 may be connected to the first reflection unit 2 to rotate the first reflection unit 2 and in addition, the lifter 61 may be connected to the rotor 66 to move the positions of the rotor 66 and the first reflection unit 2.

Another example of the regulator 6 is that the lifter 61 may be connected to the first reflection unit 2 to move the first reflection unit 2, and in addition, the rotor 66 may be connected to the lifter 61 to rotate the lifter 61 and the first reflection unit 2.

FIG. 3 (a) is a view illustrating when the first reflection unit is in the first position, and FIG. 3 (b) is a view illustrating when the first reflection unit is in the second position.

FIG. 4 (a) is a view illustrating when images are displayed on the screen and the windshield, respectively, and FIG. 4 (b) is a view illustrating when an image is displayed on the screen and an image is not displayed on the windshield.

The first reflection unit 2 may be moved to the first position P1 and the second position P2 by the lifter 61.

The first position P1 may be the position where the projected image output from the picture generation unit 1 is distributed to the first reflection unit 2 and the second reflection unit 3, as illustrated in FIG. 3 (a).

The first position P1 may be a position when the first reflection unit 2 is located in the first optical path Path 1. The first position P1 may be the position where the first reflection unit 2 does not block the second optical path Path 2.

The first reflection unit 2 may be disposed to be moved to a first position P1 other than the second optical path Path 2 and a second position P2 located in the second optical path Path 2.

When the first reflection unit 2 is located at the first position P1, the projected image emitted from the picture generation unit 1 may be divided into the first reflection surface 21 of the first reflection unit 2 and the second reflection surface 31 of second reflection unit 3, and the first reflection unit 2 may reflect a part of the projected image (first image) emitted from the picture generation unit 1 onto the screen 4, and the second reflection unit 3 may reflect the remainder of the projected image (second image) emitted from the picture generation unit 1 to the windshield 5.

As illustrated in FIG. 4 (a), the user may check the image SI displayed on the screen 4 and the image WI displayed on the windshield 5.

The second position P2 may be the position where the first reflection unit 2 reflects all of the projected images output from the picture generation unit 1 onto the screen 4.

The second position P2 may be the position where the first reflection unit 2 blocks the second optical path Path 2, as illustrated in FIG. 3 (b).

When the first reflection unit 2 is located at the second position P2, all the projected image emitted from the picture generation unit 1 may be reflected to the screen 4 by the first reflection surface 21 of the first reflection unit 2, as illustrated in FIG. 3 (b).

When the first reflection unit 2 is located at the second position P2, the second reflection unit 3 may not be able to reflect the projected image emitted from the picture generation unit 1 to the windshield 5.

When the first reflection unit 2 is located at the second position P2, the area of the portion reflecting the projected image among the first reflection surfaces 21 of the first reflection unit 2 may be wider than that when the first reflection unit 2 is located at the first position P1, and the area of the image on the screen 4 may be enlarged than that when the first reflection unit 2 is located at the first position P1.

As illustrated in FIG. 4 (b), the occupant may check the image displayed on the screen 4.

The angle of the first reflection surface 21 of the first reflection unit 2 may be changed by the rotor 66.

When the rotor 66 rotates the first reflection unit 2, the position (that is, height) of the image displayed on the screen 4 may change.

The vehicle display device may comprise a housing 7 (see FIG. 1).

The housing 7 may be placed underneath the windshield 5. The housing 7 may be spaced apart from the windshield 5 in the vertical direction.

A space may be formed inside the housing 7.

The picture generation unit 1, the first reflection unit 2, the second reflection unit 3, and the regulator 6 may be accommodated in the space of the housing 7.

An opening may be formed on the rear surface of the housing 7, and the screen 4 may be disposed on the rear surface of the housing 7.

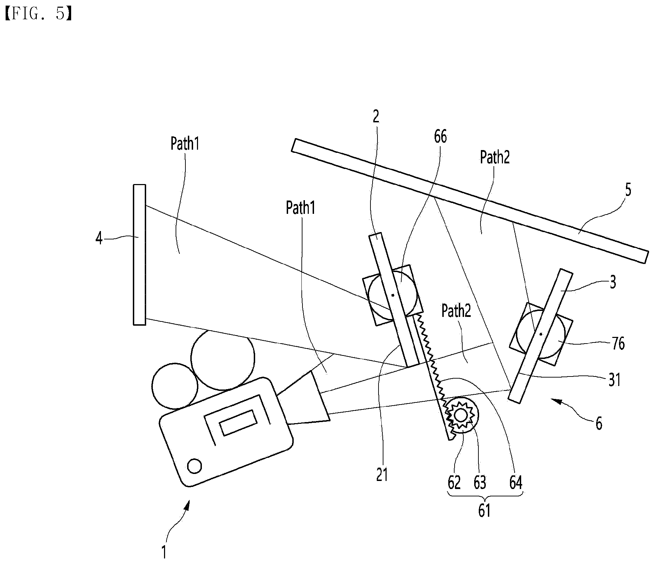

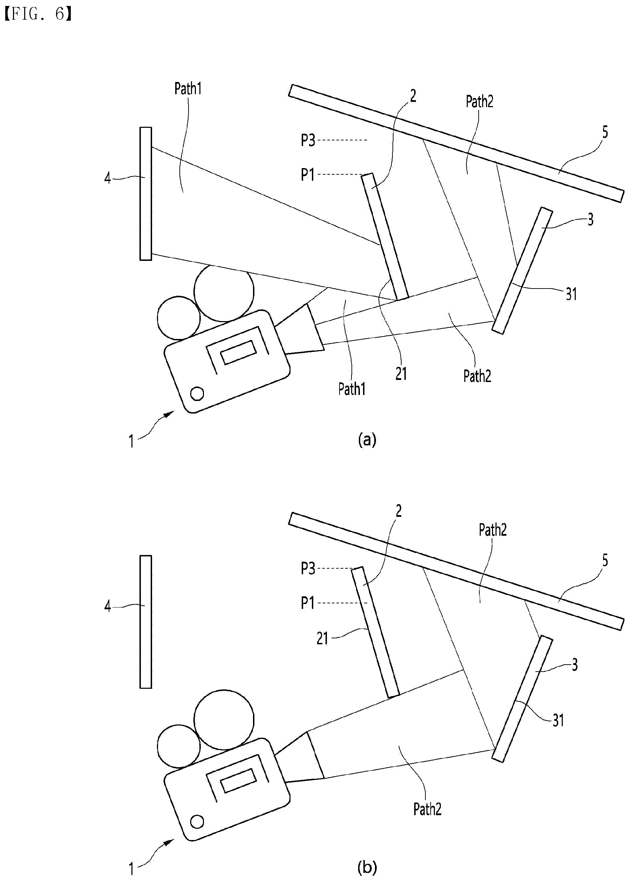

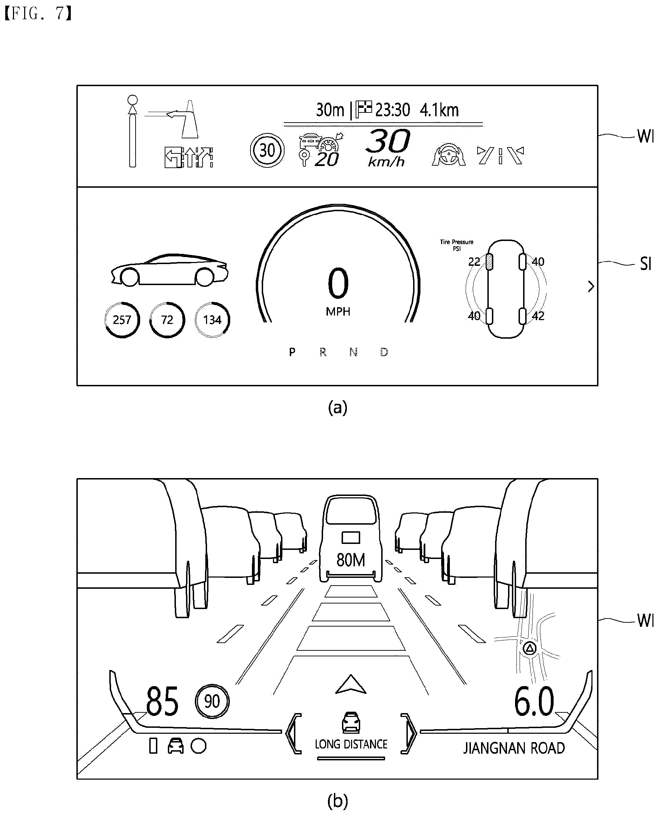

FIG. 5 is a side view illustrating a second example of a vehicle display device according to the present embodiment, FIG. 6 is a side view illustrating an example in which the position of the first reflection unit illustrated in FIG. 5 is regulated, and FIG. 7 is a view illustrating a display formed by a second example of a vehicle display device according to the present embodiment.

A second example of a vehicle display device may comprise a regulator 6, and the regulator 6 may comprise a lifter 61 that moves the position of the first reflection unit 2 and a rotor 66 that changes the angle of the first reflection unit 2.

Each of the picture generation unit 1, the first reflection unit 2, and the second reflection unit 3 may be the same as the second example of the vehicle display device.

The lifter 61 may be the same or similar to the lifter 61 of the first example of the vehicle display device, and, to avoid redundant description, the same symbols are used, and detailed description thereof is omitted.

The rotor 66 may be the same or similar to the rotor 66 of the first example of the vehicle display device, and, to avoid duplicate description, the same symbols are used, and detailed description thereof is omitted.

FIG. 6 (a) is a view illustrating when the first reflection unit is located at the first position, and FIG. 6 (b) is a view illustrating when the first reflection unit is located at the third position.

FIG. 7 (a) is a view illustrating when an image is displayed on each of the screen and the windshield, and FIG. 7 (b) is a view illustrating when an image is displayed on the windshield without an image being displayed on the screen.

When the first reflection unit 2 is located at the first position P1, the projected image output from the image generating unit 1 may be distributed and directed toward the screen 4 and the windshield 5, as illustrated in FIG. 6 (a).

When the first reflection unit 2 is located at the first position P1, the occupant may check the image SI displayed on the screen 4 and the image W1 displayed on the windshield 5, as illustrated in FIG. 7 (a).

When the first reflection unit 2 is located at the first position P1, it is the same as the first example of the vehicle display device, and therefore, detailed description thereof will be omitted to avoid redundant description.

The first reflection unit 2 may be movably disposed to the third position P3 by the lifter 61.

The third position P3 may be the position where the projected image output from the picture generation unit 1 is not reflected by the first reflection unit 2, and the third position P3 may be the position where the first reflection unit 2 does not form the first optical path Path 1, and the projected image output from the picture generation unit 1 may not reach the screen 4.

The third position P3 may be the position of the first reflection unit 2 where the second reflection unit 3 forms the second optical path Path 2.

As illustrated in FIG. 6 (b), the projected image emitted from the picture generation unit 1 may all be directed to the second reflection surface 31 of the second reflection unit 3, and may be reflected to the windshield 5.

When the first reflection unit 2 is located at the third position P3, the occupant may only check the image WI displayed by the windshield 5.

When the first reflection unit 2 is located at the third position P3, the size of the area of the second reflection unit 3 that reflects the projected image may be larger than area when the first reflection unit 2 is located at the first position P1.

When the first reflection unit 2 is located at the third position P3, the size of the area on which the projected image is displayed through the windshield 5 may be equal to the sum of the area where the projected image is displayed on the screen 4 and the area where the projected image is displayed through the windshield 5, when the first reflection unit 2 is located at the first position P1.

The regulator 6 may also change the angle of the first reflection unit 2 by the rotor 66 when the position of the first reflection unit 2 is changed to the third position P3.

Meanwhile, the regulator 6 may further comprise a rotor 76 that changes the angle of the second reflection unit 3. The rotor 76 that changes the angle of the second reflection unit 3 may be a rotation drive source that rotates the second reflection unit 3, and may comprise a rotation motor connected to the second reflection unit 3. Hereinafter, the rotor and rotation motor are indicated by reference numeral 76.

Hereinafter, the rotor 76 that changes the angle of the second reflection unit 3 will be referred to as a second rotor and will be described.

The second rotor 76 may change the angle of the second reflection unit 3 when the position of the first reflection unit 2 is changed to the third position P3, and the size of the area where the projected image is reflected among the windshield 5 may be changed.

The second example of a vehicle display device may be capable of changing the size of the image SI displayed through the screen 4 and the size of the image WI displayed through the windshield 5, and, according to the occupant's request, the size of the image SI displayed through the screen 4 may be enlarged, or the size of the image WI displayed through the windshield 5 may be enlarged.

The fact that the first reflection unit 2 is moved to the third position P3 may mean that the entire area where the projected image is displayed is used as a HUD, and information on a large screen such as an AR-HUD may be provided while the vehicle is driving. Meanwhile, in autonomous driving mode or in situations where the vehicle is not driving, the HUD may provide entertainment (video/movie) information on a large screen.

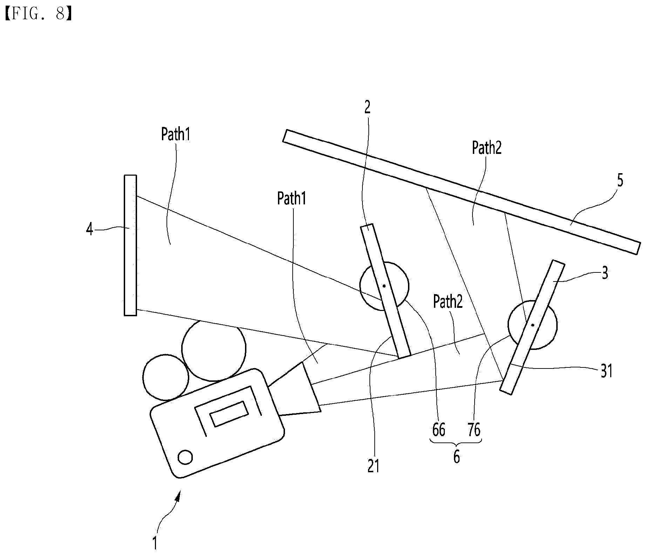

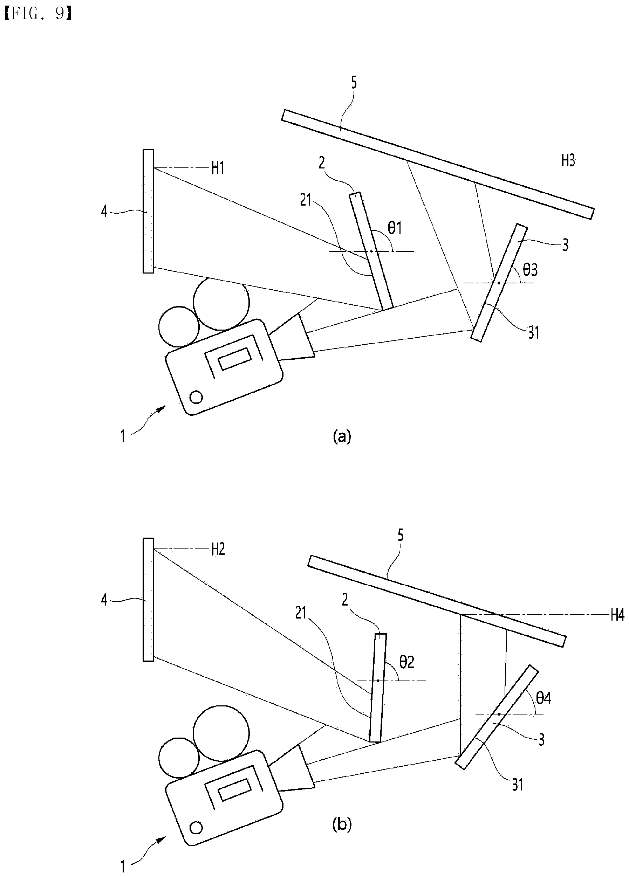

FIG. 8 is a side view illustrating a third example of a vehicle display device according to the present embodiment, and FIG. 9 is a side view illustrating an example of regulating the angle of the first reflection unit and the angle of the second reflection unit illustrated in FIG. 8.

The regulator 6 of the third example of the vehicle display device may comprise a rotor 66 that changes the angle of the first reflection unit 2 and a rotor 76 that changes the angle of the second reflection unit 3.

In the third example of a vehicle display device, the height of the image displayed on the screen 4 and the height of the image displayed through the windshield 5 may be changed by changing the angle of the first reflection unit 2 and the angle of the second reflection unit 3.

FIG. 9 (a) is a view illustrating when the height of the image displayed on the screen is low and the height of the image displayed through the windshield is high, and FIG. 9 (b) is a view illustrating when the height of the image displayed on the screen is high and the height of the image displayed through the windshield is low.

Hereinafter, the rotor 66 that changes the angle of the first reflection unit 2 will be referred to as a first rotor, and the rotor 76 that changes the angle of the second reflection unit 3 will be referred to as a second rotor.

The first reflection unit 2 may be changed to a first angle θ1 and a second angle θ2 by the first rotor 66, and the first angle θ1 may be an angle that reflects the projected image output from the picture generation unit 1 to the first height H1 of the screen 4, and the second angle θ2 may be the angle that reflects the projected image output from the picture generation unit 1 to the second height H1 of the screen 4.

The second height H2 of the screen 4 may be higher than the first height H1 of the screen 4.

The third example of the vehicle display device may adjust the heights H1, H2 of the image displayed on the screen 4 to suit the eye level of the occupant by using the first rotor 66.

In other words, the position of the displayed image displayed through the screen 4 may be changed.

The second reflection unit 3 may be changed to the first angle θ3 and the second angle θ4 by the second rotor 76. The first angle θ3 may be an angle that reflects the projected image output from the picture generation unit 1 to the first height H3 of the windshield 5, and the second angle θ4 may be an angle that reflects the projected image output from the image generating unit 1 to the second height H4 of the windshield 5.

The second height H4 of the wind shield 5 may be lower than the first height H3 of the wind shield 5.

The third example of the vehicle display device may change the position of the image displayed through the windshield 5, that is, the heights H3 and H4, by the second rotor 76.

In other words, the position (height) of the image displayed through the HUD may be changed.

A third example of a vehicle display device may be provided with a first rotor 66 that changes the angle of the first reflection unit 2 and a second rotor 76 that changes the angle of the second reflection unit 3.

The first modification of the third example of the vehicle display device may be an example in which only the first rotor 66 of the first rotor 66 and the second rotor 76 is provided.

The second modification of the third example of the vehicle display device may be an example in which only the second rotor 76 of the first rotor 66 and the second rotor 76 is provided.

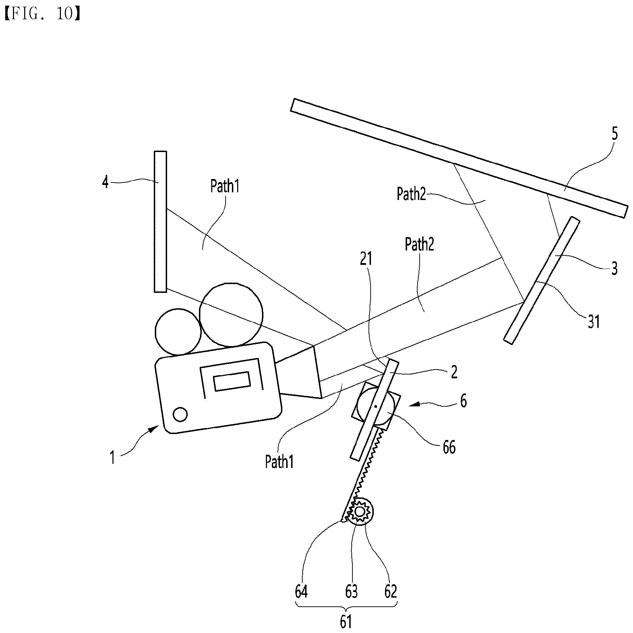

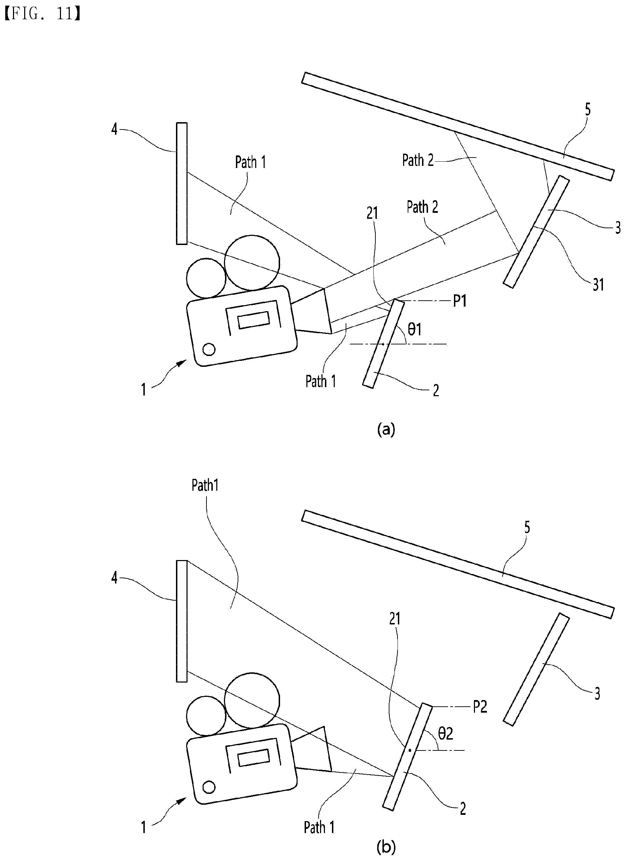

FIG. 10 is a side view illustrating a fourth example of a vehicle display device according to the present embodiment, and FIG. 11 is a side view illustrating an example in which the position and angle of the first reflection unit illustrated in FIG. 10 are regulated.

The first reflection unit 2 and the second reflection unit 3 may be tilted in the same direction.

The first reflection surface 21 of the first reflection unit 2 may face the upper rear side, and the first reflection surface 31 of the second reflection unit 3 may face the upper rear side.

The first reflection unit 2 and the second reflection unit 3 may be side by side.

The height of the first reflection unit 2 may be lower than the height of the second reflection unit 3.

FIG. 11 (a) is a view illustrating when an image is displayed on each of the screen and windshield, and FIG. 11 (b) is a view illustrating when an image is displayed on the screen.

In the fourth example of a vehicle display device, the regulator 6 may comprise a lifter 61 that moves the position of the first reflection unit 2 and a rotor 66 that changes the angle of the first reflection unit 2.

In the fourth example of a vehicle display device, the rotor 66 is connected to the first reflection unit 2 to rotate the first reflection unit 2, and in addition, the lifter 61 is connected to the rotor 66 to move the positions of the rotor 66 and the first reflection unit 2.

When the motor of the lifter 61 is driven, the position of the first reflection unit 2 may be changed.

The lifter 61 may lower the first reflection unit 2 to a first position P1 where the first reflection unit 2 forms a first optical path Path 1 and the first reflection unit 3 forms a second optical path Path 2.

The lifter 61 may raise the first reflection unit 2 to a second position P1 where the first reflection unit 2 forms the first optical path Path 1 and the first reflection unit 3 blocks the second optical path Path 2.

When the rotation motor of the rotor 66 is driven, the angle of the first reflection unit 2 may be changed.

The rotor 66 rotates the first reflection unit 2 at a first angle θ1 that does not block the second optical path Path 2 while the first reflection unit 2 forms the first optical path Path 1.

The rotor 66 rotates the first reflection unit 2 at a second angle θ2 that blocks the second optical path Path 2 while the first reflection unit 2 forms the first optical path Path 1.

When the motor of the lifter 61 is driven and the rotation motor of the rotor 66 is driven, all projected images output from the picture generation unit 1 may be reflected on the screen 4 by the first reflection unit 2. The size of the image displayed on the screen 4 may be expanded.

When the first reflection unit 2 is in the second position or at the second angle, the size of the image displayed on the screen 4 may be equal to the sum of the area where the projected image is displayed on the screen and the area where the projected image is displayed through the windshield 5.

In a modification of the fourth example of the vehicle display device, the lifter 61 is connected to the first reflection unit 2 to move the position of the first reflection unit 2, and, in addition, the rotor 66 is connected to the lifter 61 to rotate the lifter 61 and the first reflection unit 2.

Similar to the first example of the vehicle display device, the fourth example of the vehicle display device according to the present embodiment may change the position of the first reflection unit 2 or the angle of the first reflection unit 2, and the size of the image displayed through the screen 3 may be changed.

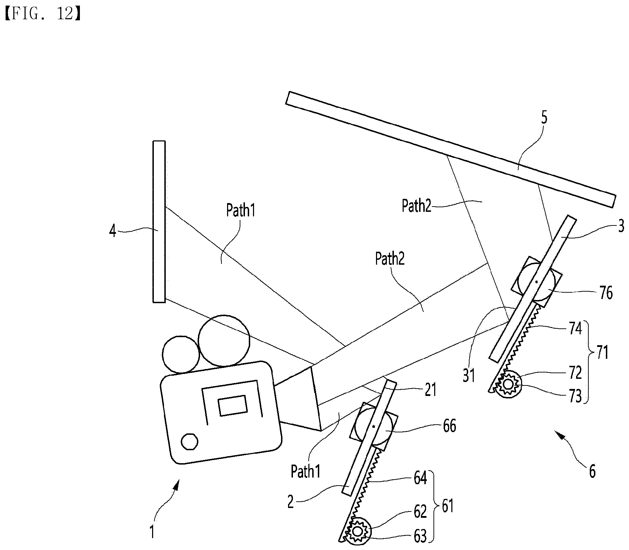

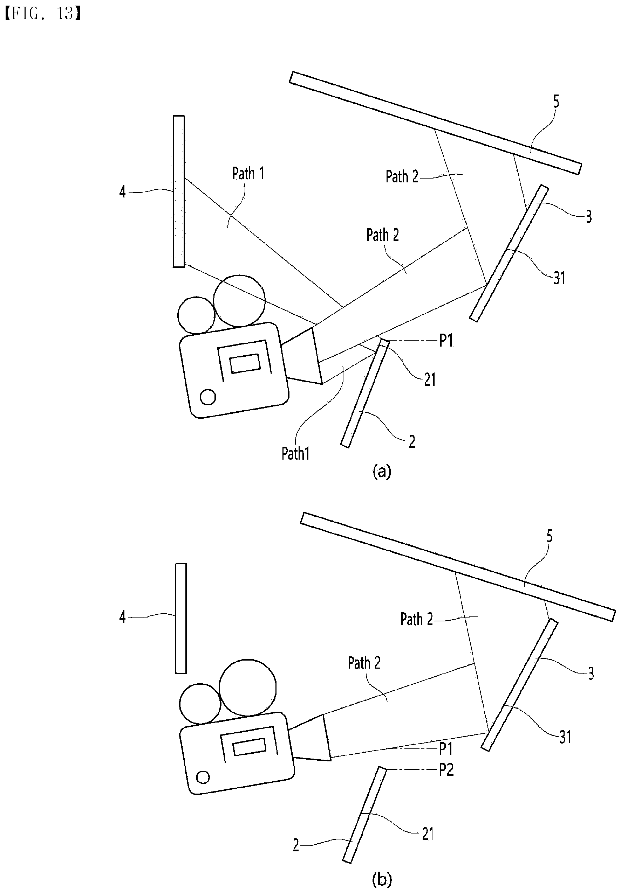

FIG. 12 is a side view illustrating a fifth example of a vehicle display device according to the present embodiment, and FIG. 13 is a side view illustrating an example in which at least one of the position and angle of the first reflection unit illustrated in FIG. 12 is regulated and at least one of the position and angle of the second reflection unit is regulated.

The first reflection unit 2 and the second reflection unit 3 may be tilted in the same direction.

The reflection surface 21 of the first reflection unit 2 may face the upper rear side, and the reflection surface 31 of the second reflection unit 3 may face the upper rear side.

The first reflection unit 2 and the second reflection unit 3 may be side by side

The height of the first reflection unit 2 may be lower than the height of the second reflection unit 3

In the fifth example of a vehicle display device, the regulator 6 may comprise a lifter 61 that moves the position of the first reflection unit 2 and a rotor 66 that changes the angle of the first reflection unit 2.

The fact that the position of the first reflection unit 2 is moved and the angle of the first reflection unit 2 is changed may be the same or similar to the fourth example of the vehicle display device.

In the fifth example of a vehicle display device, the regulator 6 may comprise a lifter 71 that moves the position of the second reflection unit 3 and a rotor 76 that changes the angle of the second reflection unit 3.

Hereinafter, the lifter 61 that moves the position of the first reflection unit 2 is referred to as the first lifter 61, the rotor 66 that changes the angle of the first reflection unit 2 is referred to as the first rotor 66, and the lifter 71 that moves the position of the second reflection unit 3 is referred to as the second lifter 71, and the rotor 76 that changes the angle of the second reflection unit 3 is referred to as the second rotor 76.

The second lifter 71 may have the same structure as the first lifter 61.

The second lifter 71 may comprise a lifting motor 72 and at least one power transmission member 73 and 74 that transmits the driving force of the lifting motor 72 to the second reflection unit 3. Examples of the power transmission members 73 and 74 may comprise a pinion 73 installed on the rotation shaft of the lifting motor 72 and a rack 74 formed on the second reflection unit 3 and meshed with the pinion 73. Another example of the second lifter 71 may be a linear motor or cylinder connected to the second reflection unit 3.

The second rotor 76 may have the same structure as the first rotor 66.

The second rotor 76 may comprise a second motor 76 connected to the second reflection unit 3.

In the fifth example of a vehicle display device, the second rotor 76 is connected to the second reflection unit 3 to rotate the second reflection unit 3, and, in addition, the second lifter 71 is connected to the second rotor 71 to move the positions of the second rotor 71 and the second reflection unit 3.

In a modification of the fifth example of the vehicle display device, the second lifter 71 is connected to the second reflection unit 3 to move the position of the second reflection unit 3, and, in addition, the second rotor 76 is connected to the second lifter 71 to rotate the second lifter 71 and the second reflection unit 3.

The fifth example of a vehicle display device may be similar to the second example of a vehicle display device.

FIG. 13 (a) is a view illustrating when the first reflection unit 2 is located in the first position to reflect the projected image emitted from the picture generation unit 1 to the screen, and FIG. 13 (b) is a view illustrating when the second reflection unit 2 does not reflect the projected image emitted from the picture generation unit 1 onto the screen and the second reflection unit 3 reflects the projected image emitted from the picture generation unit 1 onto the windshield.

When the first reflection unit 2 is located at the first position P1, it may form a first optical path Path 1 that reflects the projected image emitted from the picture generation unit 1 onto the screen.

When the first reflection unit 2 is located at the second position P2, it may not form a first optical path Path 1 that reflects the projected image emitted from the picture generation unit 1 onto the screen.

When the first reflection unit 2 is located at the second position P2, a second optical path Path 2 through which the projected image emitted from the picture generation unit 1 is reflected to the windshield by the second reflection unit 3 may be in a location that does not block it.

When the first reflection unit 2 is located at the second position P2, the size of the image displayed through the windshield 5 may be the sum of the size of the image displayed on the screen 4 and the size of the image displayed through the windshield 5.

The fifth example of a vehicle display device may provide vehicle information at the largest size of the HUD and provide entertainment information such as movies and games.

Meanwhile, a modification of the fifth example of the vehicle display device may not comprise the first lifter 61 and the second lifter 71, but may comprise the first rotor 66 and the second rotor 76.

A modification of the fifth example of the vehicle display device may change the position of the image displayed on the screen 4 by the first rotor 66 and the second rotor 76, and the position of the image displayed through the windshield 5 may be changed.

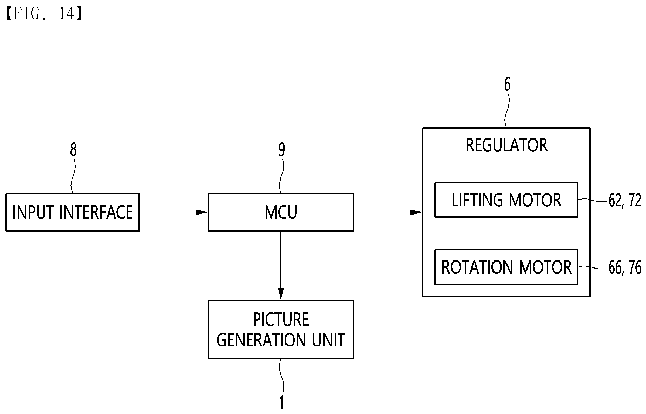

FIG. 14 is a control block diagram of a vehicle display device according to the present embodiment.

The vehicle may further comprise an input interface 8 and a micro controller unit 9 (MCU).

The input interface 8 may be a button, switch, or pad installed in the vehicle, or a microphone (not illustrated) for user voice input, or may be a touch screen placed on the screen 4.

The MCU 9 may be a vehicle MCU or a display MCU that communicates with the vehicle MCU. If the MCU 9 is a display MCU, the MCU 9 may be placed in the housing 7 (see FIG. 1).

The MCU 9 may output a control signal to the DMD of the picture generation unit 1 or output a control signal to a display element of the picture generation unit 1.

The MCU 9 may output control signals to the lifting motors 62, 72 and rotation motors 66, 76 of the regulator 6.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being comprised in the scope of rights of the present disclosure.

## Claims

1. A vehicle display device comprising:
a screen;
a picture generation unit configured to output a projected image;
a first reflection unit having a first reflection surface that reflects the projected image output from the picture generation unit to the screen;
a second reflection unit having a second reflection surface that reflects the projected image output from the picture generation unit to a windshield;
a regulator configured to change at least one of a position of the first reflection unit, an angle of the first reflection unit, a position of the second reflection unit, and an angle of the second reflection unit.

2. The vehicle display device of claim 1,
wherein a distance between the picture generation unit and the first reflection unit is shorter than a distance between the picture generation unit and the second reflection unit.

3. The vehicle display device of claim 1,
wherein a distance between the windshield and the first reflection unit is longer than a distance between the windshield and the second reflection unit.

4. The vehicle display device of claim 1,
wherein the angle of the first reflection unit and the angle of the second reflection unit are different from each other.

5. The vehicle display device of claim 1,
wherein the first reflection unit and the second reflection unit are tilted in opposite directions.

6. The vehicle display device of claim 1,
wherein the first reflection unit and the second reflection unit are parallel.

7. The vehicle display device of claim 1,
wherein the regulator comprises a lifter configured to move the position of the first reflection unit.

8. The vehicle display device of claim 7,
wherein the first reflection unit is moved to a first position or a second position by the lifter,
wherein the first position is a position where the projected image output from the picture generation unit is distributed to the first reflection unit and the second reflection unit, and
wherein the second position is a position where the first reflection unit reflects all projected images output from the picture generation unit to the screen.

9. The vehicle display device of claim 8,
wherein the first reflection unit is disposed to be movable to a third position by the lifter, and
wherein the third position is a position where the projected image output from the picture generation unit is not reflected by the first reflection unit.

10. The vehicle display device of claim 1,
wherein the regulator comprises a rotor that changes the angle of the first reflection unit.

11. The vehicle display device of claim 10,
wherein the first reflection unit is changed to a first angle or a second angle by the rotor,
wherein the first angle is an angle at which the first reflection unit reflects the projected image output from the picture generation unit to a first height of the screen,
wherein the second angle is an angle at which the first reflection unit reflects the projected image output from the picture generation unit to a second height of the screen, and
wherein the second height of the screen is higher than the first height of the screen.

12. The vehicle display device of claim 1,
wherein the regulator further comprises a lifter configured to move the position of the second reflection unit.

13. The vehicle display device of claim 1,
wherein the regulator comprises a rotor configured to change the angle of the second reflection unit.

14. The vehicle display device of claim 13,
wherein the second reflection unit is changed to a first angle or a second angle by the rotor,
wherein the first angle is an angle that reflects the projected image output from the picture generation unit to a first height of the windshield,
wherein the second angle is an angle that reflects the projected image output from the picture generation unit to a second height of the windshield, and
wherein the second height of the windshield is lower than the first height of the windshield.

15. The vehicle display device of claim 1, further comprising:
an input interface through which a user inputs; and
an MCU that controls the position or angle of at least one of the first reflection unit and the second reflection unit according to an input of the input interface.
